# EUROPEAN PATENT SPECIFICATION

(11) **EP 4 635 961 B1**
(45) Date of publication and mention of the grant of the patent: **08.07.2026**
(21) Application number: 24190421.8
(22) Date of filing: 23.07.2024
(51) Int. Cl.: C07F 5/02

(54) **METHOD FOR PREPARING SOLID BORON TRIFLUORIDE-PIPERIDINE COMPLEX**
VERFAHREN ZUR HERSTELLUNG EINES FESTEN BORTRIFLUORID-PIPERIDINKOMPLEXES
PROCÉDÉ DE PRÉPARATION D'UN COMPLEXE SOLIDE DE TRIFLUORURE DE BORE-PIPÉRIDINE

(30) Priority: 15.04.2024 CN 202410447376
(43) Date of publication of application: 22.10.2025
(73) Proprietor: Shandong Heyi Gas Co., Ltd., Dongying City, Shandong Province 257500 (CN)
(72) Inventor: Li, Kangning, Dongying City, 257500 (CN); Zhang, Shujiang, Dongying City, 257500 (CN); Yu, Chunyu, Dongying City, 257500 (CN); Yang, Jun, Dongying City, 257500 (CN); Xu, Baoyun, Dongying City, 257500 (CN); Wang, Zhejun, Dongying City, 257500 (CN); Yan, Xiuxiang, Dongying City, 257500 (CN)
(74) Representative: Moré, Solveig Helga

(56) References cited:
- JP-B1- S4 920 584
- DATABASE CAPLUS [online] 1 January 1974 (1974-01-01), HASHIMOTO CHEMICAL INDUSTRIES CO. ET AL: "Purified boron fluoride heterocyclic amine compounds - JP 49020584 B", XP093240247, Database accession no. 1975:86272

## Description

### TECHNICAL FIELD

The present disclosure relates to the technical field of chemical production, and in particular to a method for preparing a solid boron trifluoride-piperidine complex.

### BACKGROUND

Boron trifluoride-piperidine complex can usually be used as an additive and auxiliary for resins and adhesives. In recent years, the boron trifluoride-piperidine complex has been increasingly widely used in special resin materials in the aerospace and military fields, and can be used in conductive silver adhesives for electronic material packaging. Changes in application scenarios have proposed higher requirements on the quality of the boron trifluoride-piperidine complex. For example, when the boron trifluoride-piperidine complex is used in conductive silver adhesives for electronic material packaging, a corresponding product is required to be generally a white crystal with a purity of not less than 99.9% and a short melting range of 75 °C to 77 °C.

Currently, the boron trifluoride-piperidine complex products on the market basically exist in two forms, including a liquid product with methanol as a solvent and a solid boron trifluoride-piperidine complex product. The liquid product is produced by dissolving piperidine in methanol and introducing boron trifluoride gas equivalent to the piperidine. The solid product is produced by dissolving piperidine in diethyl ether, introducing boron trifluoride gas equivalent to the piperidine, subjecting a resulting generated boron trifluoride-piperidine complex to crystallization in the diethyl ether, and then filtering and drying a resulting material to obtain the solid boron trifluoride-piperidine complex. However, the products prepared by the above two methods have a high impurity content, resulting in dark color, low melting point (generally less than 40 °C), and long melting range. Moreover, the liquid products also have difficulties in packaging and transportation.

JPS4920584B1 discloses a method for preparing boron trifluoride-piperidine complex by reacting boron fluoride with piperidine in halogenated hydrocarbon solvents followed by crystallization. The crystallization processes described in Examples 2, 7, and 8 employ various solvents including halogenated solvents (tetrachloroethylene, trichloroethylene), petroleum-based solvents (petroleum ether), and aromatic hydrocarbon solvents. The purity of the boron fluoride-piperidine complex achieved through these methods ranges from 98% to 99%.

### SUMMARY

An object of the present disclosure is to provide a method for preparing a solid boron trifluoride-piperidine complex. In the present disclosure, the solid boron trifluoride-piperidine complex prepared by the method of the present disclosure is a pure white crystal with a high purity, a high melting point, and a short melting range.

To achieve the above object, the present disclosure provides the following technical solutions:
Provided is a method for preparing a solid boron trifluoride-piperidine complex, including the following steps:
introducing boron trifluoride into a piperidine solution, and conducting complexation to obtain a complex material; where the piperidine solution includes piperidine and an organic solvent, and the organic solvent is one or more selected from the group consisting of dichloromethane (DCM) and acetone;
concentrating the complex material to obtain a concentrate; and
subjecting the concentrate to crystallization by mixing the concentrate with diethyl ether, and subjecting a resulting crystallization material to solid-liquid separation to obtain the solid boron trifluoride-piperidine complex,
wherein a mass ratio of the concentrate to the diethyl ether is in a range of 1:10 to 1:15; and
wherein subjecting the concentrate to crystallization by mixing the concentrate with diethyl ether is conducted by a process comprising:
   adding a part of the diethyl ether dropwise into the concentrate, and conducting first crystal growth to obtain a first crystal growth material; and
   adding a remaining part of the diethyl ether dropwise into the first crystal growth material, and conducting second crystal growth;
   wherein the part of the diethyl ether accounts for 25% to 35% of a total mass of the diethyl ether.

In some embodiments, a mass ratio of the piperidine to the organic solvent is in a range of 1:2 to 1:4.

In some embodiments, a molar ratio of the boron trifluoride to the piperidine is in a range of 1:1.00 to 1:1.02.

In some embodiments, during introducing the boron trifluoride into the piperidine solution, the piperidine solution is at a temperature of 0 °C to 10 °C, and the boron trifluoride is introduced at a speed of 35 g/h to 45 g/h.

In some embodiments, the complexation is conducted at a temperature of 0 °C to 15 °C for a time of 2 h to 3 h; and the time of the complexation starts when the boron trifluoride is completely introduced.

In some embodiments, the concentrating is conducted by vacuum distillation at a temperature of 40 °C to 55 °C under a pressure of -0.02 MPa to -0.04 MPa.

In some embodiments, a mass ratio of the complex material to the concentrate is in a range of 1.9: 1 to 2.1:1.

In some embodiments, during adding the part of the diethyl ether dropwise into the concentrate, the concentrate is at a temperature of 10 °C to 15 °C; and the first crystal growth is conducted at a temperature of 5 °C to 10 °C for 2.5 h to 4 h.

In some embodiments, during adding the remaining part of the diethyl ether dropwise into the first crystal growth material, the first crystal growth material is at a temperature of 5 °C to 10 °C; and the second crystal growth is conducted at a temperature of 0 °C to 10 °C for 0.5 h to 2 h.

The present disclosure provides a method for preparing a solid boron trifluoride-piperidine complex, including the following steps: introducing boron trifluoride into a piperidine solution, and conducting complexation to obtain a complex material, where the piperidine solution includes piperidine and an organic solvent, and the organic solvent includes dichloromethane (DCM) and/or acetone; concentrating the complex material to obtain a concentrate; and subjecting the concentrate to crystallization by mixing the concentrate with diethyl ether, and subjecting a resulting crystallization material to solid-liquid separation to obtain the solid boron trifluoride-piperidine complex, wherein a mass ratio of the concentrate to the diethyl ether is in a range of 1:10 to 1:15; and
wherein subjecting the concentrate to crystallization by mixing the concentrate with diethyl ether is conducted by a process comprising: adding a part of the diethyl ether dropwise into the concentrate, and conducting first crystal growth to obtain a first crystal growth material; and adding a remaining part of the diethyl ether dropwise into the first crystal growth material, and conducting second crystal growth; wherein the part of the diethyl ether accounts for 25% to 35% of a total mass of the diethyl ether. In the present disclosure, boron trifluoride gas and pyridine are directly complexed, making the prepared boron trifluoride-piperidine complex have high purity and desirable quality. The DCM and/or acetone are used as reaction solvents that do not react with boron trifluoride, which is helpful to avoid the generation of impurities. Moreover, both of the above reaction solvents have desirable solubility for piperidine and the boron trifluoride-piperidine complex, which could enable boron trifluoride and piperidine to always react in equal amounts in a homogeneous system. After the reaction, concentration is conducted, which could reduce the dissolved amount of the product on one hand, and facilitate the discharge of possible excess unreacted boron trifluoride (when vacuum distillation is used for concentration, a higher temperature is helpful to reduce the solubility of boron trifluoride gas in the complex material) on the other hand. Then, taking the advantage of a low solubility of the boron trifluoride-piperidine complex in diethyl ether, a resulting concentrate is crystallized with the diethyl ether. After solid-liquid separation, a solid boron trifluoride-piperidine complex could be obtained with a high quality. The results of the examples show that the solid boron trifluoride-piperidine complex prepared by the method of the present disclosure is a pure white crystal with desirable crystal form, uniform particles, low caking, high melting point, and short melting range, making it easy to store, transport, and use.

Moreover, the method provided by the present disclosure has mild reaction conditions, simple operations, high product yield, and low cost, which has high scientific and economic benefits.

Furthermore, the DCM, acetone, and diethyl ether in the present disclosure could be recycled, thereby effectively reducing costs and reducing environmental pressure.

### BRIEF DESCRIPTION OF THE DRAWINGS

Figure shows a process flow diagram of the method for preparing the solid boron trifluoride-piperidine complex according to an embodiment of the present disclosure.

### DETAILED DESCRIPTION OF THE EMBODIMENTS

The present disclosure provides a method for preparing a solid boron trifluoride-piperidine complex, including the following steps:
introducing boron trifluoride into a piperidine solution, and conducting complexation to obtain a complex material; where the piperidine solution includes piperidine and an organic solvent, and the organic solvent includes dichloromethane (DCM) and/or acetone;
concentrating the complex material to obtain a concentrate; and
mixing the concentrate with diethyl ether, and conducting crystallization, and subjecting a resulting crystallization material to solid-liquid separation to obtain the solid boron trifluoride-piperidine complex; wherein a mass ratio of the concentrate to the diethyl ether is in a range of 1:10 to 1: 15; and
wherein subjecting the concentrate to crystallization by mixing the concentrate with diethyl ether is conducted by a process comprising:
   adding a part of the diethyl ether dropwise into the concentrate, and conducting first crystal growth to obtain a first crystal growth material; and
   adding a remaining part of the diethyl ether dropwise into the first crystal growth material, and conducting second crystal growth;
   wherein the part of the diethyl ether accounts for 25% to 35% of a total mass of the diethyl ether.

In prior arts, the reaction solvent used for preparing liquid or solid products of boron trifluoride-piperidine complex is generally methanol or diethyl ether. However, the methanol and diethyl ether themselves react easily with boron trifluoride; thus, the end point of the reaction considered by human does not mean that there is no methanol complex or diethyl ether complex. Other impurities are produced under the influence of boron trifluoride, and there is a generally high impurity content, especially in the production of the solid products, which is a heterogeneous process most of the time, and the crystallization process is also a process of encapsulating impurities, and the impurities cannot be removed by effective means in the later stage. Moreover, since both methanol and diethyl ether are easy to react with boron trifluoride, they are easily affected by the strong catalytic influence of the boron trifluoride during the reaction to generate colored polymers or peroxides, which are difficult to be removed. Especially in the production of the solid products, decolorization cannot be achieved, resulting in darker products. In addition, the boron trifluoride-diethyl ether complex has a boiling point of greater than 120 °C and is liquid at room temperature and low temperature. The boron trifluoride-diethyl ether complex residue may cause the boron trifluoride-piperidine complex solid product to have a relatively low melting point (generally less than 40 °C) and a long melting range, which is not suitable for storage especially in summer. Moreover, the liquid products also show difficulties in packaging and transportation. The solid boron trifluoride-piperidine complex prepared by the method of the present disclosure is a pure white crystal with a desirable purity, a high melting point, and a short melting range. The method of the present disclosure will be described in detail below. In the present disclosure, unless otherwise specified, all raw materials required for preparation are commercially available products well known to those skilled in the art.

In the present disclosure, boron trifluoride is introduced into a piperidine solution, and complexation is conducted to obtain a complex material. In the present disclosure, the piperidine solution includes piperidine and an organic solvent. In some embodiments, the piperidine solution can be obtained by mixing piperidine with the organic solvent. In the present disclosure, the organic solvent includes DCM and/or acetone, preferably the DCM or acetone, and more preferably the acetone. In the present disclosure, the DCM and/or acetone is used, which could dissolve the product, and is conducive to a more complete homogeneous reaction and mild reaction conditions. In particular, the acetone could react under relatively milder conditions than DCM, has better stability, and is beneficial to reducing energy consumption. In some embodiments, a mass ratio of the piperidine to the organic solvent is in a range of 1:2 to 1:4, preferably 1:2.5 to 1:3.5, and more preferably 1:3. In some embodiments, the piperidine is mixed with the organic solvent, and a resulting material is cooled to a temperature of 0 °C to 10 °C (preferably 0 °C to 5 °C) under first stirring. Then, the piperidine is completely dissolved in the organic solvent by maintaining the first stirring to obtain the piperidine solution. In some embodiments, the first stirring is conducted at a speed of 50 r/min to 70 r/min, and preferably 60 r/min.

After the piperidine solution is obtained, the boron trifluoride is introduced into the piperidine solution, and then complexation is conducted on a resulting mixture to obtain the complex material. In some embodiments, a molar ratio of the boron trifluoride to the piperidine is in a range of 1:1.00 to 1:1.02, and preferably 1:1.01. In some embodiments, during introducing boron trifluoride into the piperidine solution, the piperidine solution is at a temperature of 0 °C to 10 °C (preferably 0 °C to 5 °C). In some embodiments, for small-scale and pilot-scale production, the boron trifluoride is introduced at a speed of 35 g/h to 45 g/h, and preferably 35 g/h to 40 g/h (in some embodiments, the boron trifluoride is introduced for 3.5 h to 4.5 h, and preferably 3.5 h to 4 h). In some embodiments, the boron trifluoride is introduced into the piperidine solution at a constant speed. In some embodiments,, the boron trifluoride is introduced into the piperidine solution under second stirring, and the second stirring is conducted at a speed of 80 r/min to 100 r/min, and preferably 90 r/min to 100 r/min. In some embodiments, the temperature of the piperidine solution and the second stirring speed are controlled within the above ranges to avoid the system from generating a large amount of heat during the introduction of boron trifluoride. In some embodiments, the boron trifluoride has a purity of greater than or equal to 99.99%. In one example of the present disclosure, an autoclave containing the piperidine solution is evacuated to -0.08 MPa to -0.06 MPa, a canned boron trifluoride gas is used, and the boron trifluoride gas is introduced into the piperidine solution at a constant speed through a two-stage pressure reducing valve, and subjected to complexation. In some embodiments, the complexation is conducted at a temperature of 0 °C to 15 °C, and preferably 5 °C to 10 °C. In some embodiments, the complexation is conducted for a time of 2 h to 3 h, and preferably 2 h to 2.5 h; and the time of the complexation starts when the boron trifluoride is completely introduced. In some embodiments, the complexation is conducted under third stirring, and the third stirring is conducted at a speed of 40 r/min to 60 r/min, and preferably 50 r/min.

After the complex material is obtained, the complex material is concentrated to obtain a concentrate. In some embodiments, the concentration is conducted by vacuum distillation. In some embodiments, the vacuum distillation is conducted at a temperature of 40 °C to 55 °C, and preferably 45 °C to 50 °C. In some embodiments, the vacuum distillation is conducted under a pressure of -0.02 MPa to -0.04 MPa, and preferably -0.02 MPa to -0.03 MPa. In some embodiments, the vacuum distillation is conducted under fourth stirring, and the fourth stirring is conducted at a speed of 40 r/min to 60 r/min, and preferably 50 r/min. In some embodiments, a mass ratio of the complex material to the concentrate is in a range of 1.9:1 to 2.1:1, and preferably 2:1. In the present disclosure, the vacuum distillation is conducted to ensure that the mass ratio of the complex material to the concentrate meets the above requirements. In some embodiments, during the vacuum distillation, the distilled organic solvent is collected into a storage tank through a condenser for recycling. In some embodiments, the condenser is at a temperature of -10 °C to - 20 °C, and preferably -10 °C to -15 °C. In one example of the present disclosure, the concentration is conducted in a concentration crystallization kettle.

After the concentrate is obtained, the concentrate is subjected to crystallization by mixing the concentrate with diethyl ether, and then a resulting material is subjected to solid-liquid separation to obtain the solid boron trifluoride-piperidine complex. A mass ratio of the concentrate to the diethyl ether is in a range of 1:10 to 1:15, specifically 1:10, 1:11, 1:12, 1:13, 1:14, or 1:15. In the present disclosure, subjecting the concentrate to crystallization by mixing the concentrate with diethyl ether is conducted by a process including:
adding a part of the diethyl ether dropwise into the concentrate, and conducting first crystal growth to obtain a first crystal growth material; and
adding a remaining part of the diethyl ether dropwise into the first crystal growth material, and conducting second crystal growth.

A a part of the diethyl ether is added dropwise into the concentrate, and a resulting material is subjected to first crystal growth to obtain a first crystal growth material. The part of the diethyl ether accounts for 25% to 35%, and preferably 30% to 35% of a total mass of the diethyl ether. In some embodiments, the part of the diethyl ether is added dropwise at a speed of 19 g/min to 21 g/min, and preferably 20 g/min. In some embodiments, during the dropwise addition of the part of the diethyl ether, the concentrate is at a temperature of 10 °C to 15 °C, and preferably 13 °C to 15 °C. In some embodiments, the part of the diethyl ether is added dropwise under fifth stirring, and the fifth stirring is conducted at a speed of 20 r/min to 30 r/min, and preferably 25 r/min to 30 r/min. In some embodiments, the first crystal growth is conducted at a temperature of 5 °C to 10 °C, and preferably 8 °C to 10 °C. In some embodiments, the first crystal growth is conducted for 2 h to 4 h, and preferably 3 h. In some embodiments, the first crystal growth is conducted under sixth stirring, and the sixth stirring is conducted at a speed of 10 r/min to 20 r/min, and preferably 15 r/min.

After the first crystal growth material is obtained, a remaining part of the diethyl ether is added dropwise into the first crystal growth material, and a resulting material is subjected to second crystal growth. In some embodiments, the remaining part of the diethyl ether is added dropwise at a speed of 23 g/min to 25 g/min, and preferably 24 g/min. In some embodiments, during the dropwise addition of the remaining part of the diethyl ether, the first crystal growth material is at a temperature of 5 °C to 10 °C, and preferably 8 °C to 10 °C. In some embodiments, the remaining part of the diethyl ether is added dropwise under seventh stirring, and the seven stirring is conducted at a speed of 20 r/min to 30 r/min, and preferably 25 r/min. In some embodiments, the second crystal growth is conducted at a temperature of 0 °C to 10 °C, and preferably 5 °C to 10 °C. In some embodiments, the second crystal growth is conducted for 0.5 h to 1.5 h, and preferably 1 h. In some embodiments, the second crystal growth is conducted under eighth stirring, and the eighth stirring is conducted at a speed of 15 r/min to 30 r/min, and preferably 15 r/min to 20 r/min. In some embodiments, the above method is used for crystallization, which could control the crystal form, facilitate the recycling of material, reduce energy consumption, help to improve product yield and product quality, and reduce production costs.

After the crystallization, a resulting crystallization material is subjected to solid-liquid separation to obtain the solid boron trifluoride-piperidine complex. In some embodiments, the solid-liquid separation is conducted by centrifugal separation. In some embodiments, the centrifugal separation is conducted at a speed of 8,000 r/min to 10,000 r/min, and preferably 8,000 r/min to 9,000 r/min. In some embodiments, the centrifugal separation is conducted for 20 min to 40 min, and preferably 30 min. In some embodiments, when the centrifugal separation is conducted, the crystallization material is at a temperature of -5 °C to 5 °C, and preferably 0 °C. In one example of the present disclosure, after the crystallization is completed, the resulting crystallization material is put into a centrifuge, and subjected to centrifugal separation. In the present disclosure, after the centrifugal separation, a mother liquor and a solid material are obtained. In some embodiments, the mother liquor is recovered after rectification, and the solid material is dried to obtain the solid boron trifluoride-piperidine complex. In some embodiments, the drying is vacuum drying, and the vacuum drying has a vacuum degree of not greater than -0.6 MPa. In some embodiments, the vacuum drying includes first vacuum drying and second vacuum drying in sequence, where the first vacuum drying is conducted at a temperature of 45 °C to 50 °C for 2 h, and the second vacuum drying is conducted at a temperature of 55 °C to 60 °C for 2 h.

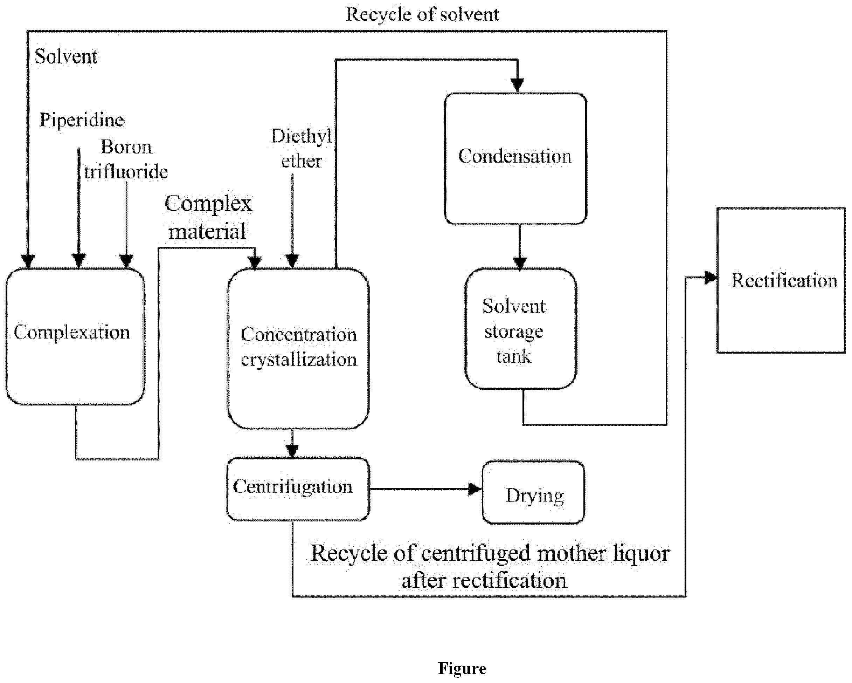

FIG. 1 shows a process flow diagram of the method for preparing the solid boron trifluoride-piperidine complex according to an embodiment of the present disclosure. The technical solutions of the present disclosure will be clearly and completely described below with reference to the examples and FIG. 1 of the present disclosure. Apparently, the described examples are merely a part rather than all of the examples of the present disclosure.

### Example 1

200.0 g of piperidine and 600.0 g of DCM were added into a three-necked flask, cooled to 0 °C by stirring at 60 r/min, and stirred at 60 r/min for another 0.5 h to completely dissolve the piperidine in the DCM to obtain a piperidine solution. Then, the three-necked flask was evacuated to -0.06 MPa, and 160.84 g of a canned high-purity (99.99%) boron trifluoride gas was introduced into the piperidine solution at a constant speed by a two-stage pressure reducing valve while stirring at 100 r/min for 4 h and keeping the material in the three-necked flask at 0 °C. After the introduction of the boron trifluoride gas was completed, a resulting material was reacted at 5 °C for 2 h under stirring at 50 r/min.

After the reaction, a resulting product system was heated to 45 °C and subjected to vacuum distillation under stirring at 50 r/min under -0.02 MPa to obtain 480.0 g of a concentrate. During the vacuum distillation, the distilled DCM was collected through a condenser (-10 °C), and 427.2 g of the DCM (theoretically distilled 479.25 g, yield 89.14%) was distilled out and recycled. After the vacuum distillation, a total of 4,800.0 g of diethyl ether was added dropwise into the 480.0 g of concentrate (a mass ratio of the diethyl ether to the concentrate was 10:1). Specifically, first, 1,440.0 g of diethyl ether was added dropwise into the concentrate at 20 g/min under stirring at 30 r/min and 15 °C, and a boron trifluoride-piperidine complex was gradually precipitated out from a resulting material. Then, the dropwise addition was stopped, the resulting material was cooled to 10 °C, and subjected to first crystal growth for 3 h by stirring at 15 r/min. Then, the remaining diethyl ether was added dropwise at 24 g/min under stirring at 25 r/min and 10 °C, and the boron trifluoride-piperidine complex was gradually precipitated out from a resulting material. Then, the dropwise addition was stopped, the resulting material was kept at 10 °C, and subjected to second crystal growth for 1 h by stirring at 15 r/min. Then, the resulting material was cooled to 0 °C, and subjected to centrifugal separation at 8,000 r/min for 30 min to obtain a mother liquor and a solid material. The mother liquor had a weight of 4,938.5 g, and was subjected to rectification and recycled. The solid material had a wet weight of 341.5 g. The solid material was vacuum dried in a vacuum drying oven under a vacuum degree of less than -0.6 MPa at 45 °C for 2 h, and then vacuum dried at 60 °C for 2 h. Finally, 309.3 g of the boron trifluoride-piperidine complex was obtained as pure white crystals, with a yield of 86.10%.

### Example 2

200.0 g of piperidine and 600.0 g of DCM were added into a three-necked flask, cooled to 0 °C by stirring at 60 r/min, and stirred at 60 r/min for another 0.5 h to completely dissolve the piperidine in the DCM to obtain a piperidine solution. Then the three-necked flask was evacuated to -0.06 MPa, and 160.84 g of a canned high-purity (99.99%) boron trifluoride gas was introduced into the piperidine solution at a constant speed by a two-stage pressure reducing valve while stirring at 100 r/min for 4 h and keeping the material in the three-necked flask at 0 °C. After the introduction of the boron trifluoride gas was completed, a resulting material was reacted at 5 °C for 2 h under stirring at 50 r/min.

After the reaction, a resulting product system was heated to 45 °C and subjected to vacuum distillation under stirring at 50 r/min under -0.02 MPa to obtain 481.7 g of a concentrate. During the vacuum distillation, the distilled DCM was collected through a condenser (-10 °C), and 428.2 g of the DCM (theoretically distilled 477.55 g, yield 89.67%) was distilled out and recycled. After the vacuum distillation, a total of 7,225.5 g of diethyl ether was added dropwise into the 481.7g of concentrate (a mass ratio of the diethyl ether to the concentrate was 15:1). Specifically, first, 2,160.0 g of diethyl ether was added dropwise into the concentrate at 20 g/min under stirring at 30 r/min and 15 °C, and a boron trifluoride-piperidine complex was gradually precipitated out from a resulting material. Then, the dropwise addition was stopped, the resulting material was cooled to 10 °C, and subjected to first crystal growth for 3 h by stirring at 15 r/min. Then, the remaining diethyl ether was added dropwise at 24 g/min under stirring at 25 r/min and 10 °C, and the boron trifluoride-piperidine complex was gradually precipitated out from a resulting material. Then, the dropwise addition was stopped, the resulting material was kept at 10 °C, and subjected to second crystal growth for 1 h by stirring at 15 r/min. Then, the resulting material was cooled to 0 °C, and subjected to centrifugal separation at 8,000 r/min for 30 min to obtain a mother liquor and a solid material. The mother liquor had a weight of 7,350.2 g, and was subjected to rectification and recycled. The solid material had a wet weight of 357.0 g. The solid material was vacuum dried in a vacuum drying oven under a vacuum degree of less than -0.6 MPa at 45 °C for 2 h, and then vacuum dried at 60 °C for 2 h. Finally, 328.14 g of the boron trifluoride-piperidine complex was obtained as pure white crystals, with a yield of 91.34%.

### Example 3

200.0 g of piperidine and 600.0 g of DCM were added into a three-necked flask, cooled to 10 °C by stirring at 60 r/min, and stirred at 60 r/min for another 0.5 h to completely dissolve the piperidine in the DCM to obtain a piperidine solution. Then, the three-necked flask was evacuated to -0.06 MPa, and 160.84 g of a canned high-purity (99.99%) boron trifluoride gas was introduced into the piperidine solution at a constant speed by a two-stage pressure reducing valve while stirring at 100 r/min for 4 h and keeping the material in the three-necked flask at 10 °C. After the introduction of the boron trifluoride gas was completed, a resulting material was reacted at 15 °C for 2 h under stirring at 50 r/min.

After the reaction, a resulting product system was heated to 45 °C and subjected to vacuum distillation under stirring at 50 r/min under -0.02 MPa to obtain 477.1 g of a concentrate. During the vacuum distillation, the distilled DCM was collected through a condenser (-10 °C), and 448.0 g of the DCM (theoretically distilled 482.15 g, yield 92.92%) was distilled out and recycled. After the vacuum distillation, a total of 7,156.5 g of diethyl ether was added dropwise into the 477.1 g of concentrate (a mass ratio of the diethyl ether to the concentrate was 15:1). Specifically, first, 2,160.0 g of diethyl ether was added dropwise into the concentrate at 20 g/min under stirring at 30 r/min and 15 °C, and a boron trifluoride-piperidine complex was gradually precipitated out from a resulting material. Then, the dropwise addition was stopped, the resulting material was cooled to 10 °C, and subjected to first crystal growth for 3 h by stirring at 15 r/min. Then, the remaining diethyl ether was added dropwise at 24 g/min under stirring at 25 r/min and 10 °C, and the boron trifluoride-piperidine complex was gradually precipitated out from a resulting material. Then, the dropwise addition was stopped, the resulting material was kept at 10 °C, and subjected to second crystal growth for 1 h by stirring at 15 r/min. Then, the resulting material was cooled to 0 °C, and subjected to centrifugal separation at 8,000 r/min for 30 min to obtain a mother liquor and a solid material. The mother liquor had a weight of 7,291.8 g, and was subjected to rectification and recycled. The solid material had a wet weight of 341.8 g. The solid material was vacuum dried in a vacuum drying oven under a vacuum degree of less than -0.6 MPa at 45 °C for 2 h, and then vacuum dried at 60 °C for 2 h. Finally, 302.1 g of the boron trifluoride-piperidine complex was obtained as pure white crystals, with a yield of 84.10%.

### Example 4

400.0 g of piperidine and 1,200.0 g of DCM were added into a three-necked flask, cooled to 0 °C by stirring at 60 r/min, and stirred at 60 r/min for another 0.5 h to completely dissolve the piperidine in the DCM to obtain a piperidine solution. Then, the three-necked flask was evacuated to -0.06 MPa, and 321.68 g of a canned high-purity (99.99%) boron trifluoride gas was introduced into the piperidine solution at a constant speed by a two-stage pressure reducing valve while stirring at 100 r/min for 4 h and keeping the material in the three-necked flask at 0 °C. After the introduction of the boron trifluoride gas was completed, a resulting material was reacted at 5 °C for 2 h under stirring at 50 r/min.

After the reaction, a resulting product system was heated to 45 °C and subjected to vacuum distillation under stirring at 50 r/min under -0.02 MPa to obtain 960.0 g of a concentrate. During the vacuum distillation, the distilled DCM was collected through a condenser (-10 °C), and 946.3 g of the DCM (theoretically distilled 961.7 g, yield 88.0%) was distilled out and recycled. After the vacuum distillation, a total of 14,400.0 g of diethyl ether was added dropwise into the 960.0 g of concentrate (a mass ratio of the diethyl ether to the concentrate was 15:1). Specifically, first, 4,320.0 g of diethyl ether was added dropwise into the concentrate at 20 g/min under stirring at 30 r/min and 15 °C, and a boron trifluoride-piperidine complex was gradually precipitated out from a resulting material. Then, the dropwise addition was stopped, the resulting material was cooled to 10 °C, and subjected to first crystal growth for 3 h by stirring at 15 r/min. Then, the remaining diethyl ether was added dropwise at 24 g/min under stirring at 25 r/min and 10 °C, and the boron trifluoride-piperidine complex was gradually precipitated out from a resulting material. Then, the dropwise addition was stopped, the resulting material was kept at 10 °C, and subjected to second crystal growth for 1 h by stirring at 15 r/min. Then, the resulting material was cooled to 0 °C, and subjected to centrifugal separation at 8,000 r/min for 30 min to obtain a mother liquor and a solid material. The mother liquor had a weight of 14,641.4 g, and was subjected to rectification and recycled. The solid material had a wet weight of 718.6 g. The solid material was vacuum dried in a vacuum drying oven under a vacuum degree of less than -0.6 MPa at 45 °C for 2 h, and then vacuum dried at 60 °C for 2 h. Finally, 664.4 g of the boron trifluoride-piperidine complex was obtained as pure white crystals, with a yield of 92.06%.

### Example 5

200.0 g of piperidine and 600.0 g of acetone were added into a three-necked flask, cooled to 0 °C by stirring at 60 r/min, and stirred at 60 r/min for another 0.5 h to completely dissolve the piperidine in the acetone to obtain a piperidine solution. Then, the three-necked flask was evacuated to -0.06 MPa, and 160.84 g of a canned high-purity (99.99%) boron trifluoride gas was introduced into the piperidine solution at a constant speed by a two-stage pressure reducing valve while stirring at 100 r/min for 4 h and keeping the material in the three-necked flask at 0 °C. After the introduction of the boron trifluoride gas was completed, a resulting material was reacted at 5 °C for 2 h under stirring at 50 r/min.

After the reaction, a resulting product system was heated to 55 °C and subjected to vacuum distillation under stirring at 50 r/min under -0.02 MPa to obtain 480.0 g of a concentrate. During the vacuum distillation, the distilled acetone was collected through a condenser (-10 °C), and 428.31 g of the acetone (theoretically distilled 479.25 g, yield 89.37%) was distilled out and recycled. After the vacuum distillation, a total of 4,800.0 g of diethyl ether was added dropwise into the 480.0 g of concentrate (a mass ratio of the diethyl ether to the concentrate was 10:1). Specifically, first, 1,440.0 g of diethyl ether was added dropwise into the concentrate at 20 g/min under stirring at 30 r/min and 15 °C, and a boron trifluoride-piperidine complex was gradually precipitated out from a resulting material. Then, the dropwise addition was stopped, the resulting material was cooled to 10 °C, and subjected to first crystal growth for 3 h by stirring at 15 r/min. Then, the remaining diethyl ether was added dropwise at 24 g/min under stirring at 25 r/min and 10 °C, and the boron trifluoride-piperidine complex was gradually precipitated out from a resulting material. Then, the dropwise addition was stopped, the resulting material was kept at 10 °C, and subjected to second crystal growth for 1 h by stirring at 15 r/min. Then, the resulting material was cooled to 0 °C, and subjected to centrifugal separation at 8,000 r/min for 30 min to obtain a mother liquor and a solid material. The mother liquor had a weight of 4936.9 g, and was subjected to rectification and recycled. The solid material had a wet weight of 343.05 g. The solid material was vacuum dried in a vacuum drying oven under a vacuum degree of less than -0.6 MPa at 45 °C for 2 h, and then vacuum dried at 60 °C for 2 h. Finally, 312.18 g of the boron trifluoride-piperidine complex was obtained as pure white crystals, with a yield of 86.90%.

### Example 6

200.0 g of piperidine and 600.0 g of acetone were added into a three-necked flask, cooled to 0 °C by stirring at 60 r/min, and stirred at 60 r/min for another 0.5 h to completely dissolve the piperidine in the acetone to obtain a piperidine solution. Then, the three-necked flask was evacuated to -0.06 MPa, and 160.84 g of a canned high-purity (99.99%) boron trifluoride gas was introduced into the piperidine solution at a constant speed by a two-stage pressure reducing valve while stirring at 100 r/min for 4 h and keeping the material in the three-necked flask at 0 °C. After the introduction of the boron trifluoride gas was completed, a resulting material was reacted at 5 °C for 2 h under stirring at 50 r/min.

After the reaction, a resulting product system was heated to 50 °C and subjected to vacuum distillation under stirring at 50 r/min under -0.02 MPa to obtain 483.3 g of a concentrate. During the vacuum distillation, the distilled acetone was collected through a condenser (-10 °C), and 428.7 g of the acetone (theoretically distilled 477.55 g, yield 89.77%) was distilled out and recycled. After the vacuum distillation, a total of 7,200 g of diethyl ether was added dropwise into the 483.3 g of concentrate (a mass ratio of the diethyl ether to the concentrate was 15:1). Specifically, first, 2,160.0 g of diethyl ether was added dropwise into the concentrate at 20 g/min under stirring at 30 r/min and 15 °C, and a boron trifluoride-piperidine complex gradually precipitated out from a resulting material. Then, the dropwise addition was stopped, the resulting material was cooled to 10 °C, and subjected to first crystal growth for 3 h by stirring at 15 r/min. Then, the remaining diethyl ether was added dropwise at 24 g/min under stirring at 25 r/min and 10 °C, and the boron trifluoride-piperidine complex was gradually precipitated out from a resulting material. Then, the dropwise addition was stopped, the resulting material was kept at 10 °C, and subjected to second crystal growth for 1 h by stirring at 15 r/min. Then, the resulting material was cooled to 0 °C, and subjected to centrifugal separation at 8,000 r/min for 30 min to obtain a mother liquor and a solid material. The mother liquor had a weight of 7,315.5 g, and was subjected to rectification and recycled. The solid material had a wet weight of 367.3 g. The solid material was vacuum dried in a vacuum drying oven under a vacuum degree of less than -0.6 MPa at 45 °C for 2 h, and then vacuum dried at 60 °C for 2 h. Finally, 328.25 g of the boron trifluoride-piperidine complex was obtained as pure white crystals, with a yield of 91.37%.

### Example 7

200.0 g of piperidine and 600.0 g of acetone were added into a three-necked flask, cooled to 10 °C by stirring at 60 r/min, and stirred at 60 r/min for another 0.5 h to completely dissolve the piperidine in the acetone to obtain a piperidine solution. Then, the three-necked flask was evacuated to -0.06 MPa, and 160.84 g of a canned high-purity (99.99%) boron trifluoride gas was introduced into the piperidine solution at a constant speed by a two-stage pressure reducing valve while stirring at 100 r/min for 4 h and keeping the material in the three-necked flask at 10 °C. After the introduction of the boron trifluoride gas was completed, a resulting material was reacted at 15 °C for 2 h under stirring at 50 r/min.

After the reaction, a resulting product system was heated to 50 °C and subjected to vacuum distillation under stirring at 50 r/min under -0.02 MPa to obtain 486.9 g of a concentrate. During the vacuum distillation, the distilled acetone was collected through a condenser (-10 °C), and 432.33 g of the acetone (theoretically distilled 473.94 g, yield 91.22%) was distilled out and recycled. After the vacuum distillation, a total of 7,200 g of diethyl ether was added dropwise into the 486.9 g of concentrate (a mass ratio of the diethyl ether to the concentrate was 15:1). Specifically, first, 2,160.0 g of diethyl ether was added dropwise into the concentrate at 20 g/min under stirring at 30 r/min and 15 °C, and a boron trifluoride-piperidine complex was gradually precipitated out from a resulting material. Then, the dropwise addition was stopped, the resulting material was cooled to 10 °C, and subjected to first crystal growth for 3 h by stirring at 15 r/min. Then, the remaining diethyl ether was added dropwise at 24 g/min under stirring at 25 r/min and 10 °C, and the boron trifluoride-piperidine complex was gradually precipitated out from a resulting material. Then, the dropwise addition was stopped, the resulting material was kept at 10 °C, and subjected to second crystal growth for 1 h by stirring at 15 r/min. Then, the resulting material was cooled to 0 °C, and subjected to centrifugal separation at 8,000 r/min for 30 min to obtain a mother liquor and a solid material. The mother liquor had a weight of 7,318.0 g, and was subjected to rectification and recycled. The solid material had a wet weight of 368.2 g. The solid material was vacuum dried in a vacuum drying oven under a vacuum degree of less than -0.6 MPa at 45 °C for 2 h, and then vacuum dried at 60 °C for 2 h. Finally, 331.48 g of the boron trifluoride-piperidine complex was obtained as pure white crystals, with a yield of 92.27%.

Table 1 shows a summary of the quality, yield, boron trifluoride content, melting range, purity, moisture content, and appearance color of the boron trifluoride-piperidine complexes prepared in Examples 1 to 7.

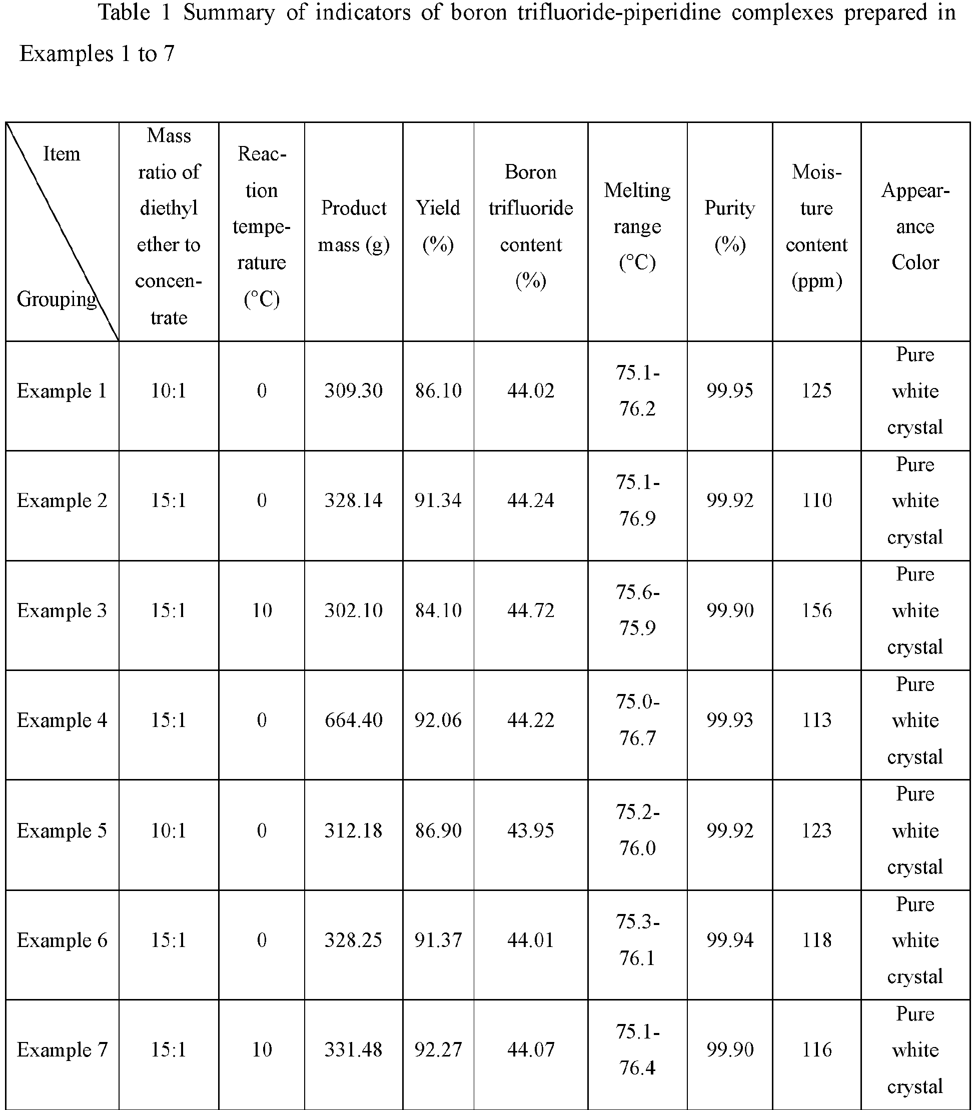

As shown in Table 1, when the method of the present disclosure is used to prepare boron trifluoride-piperidine complex, the reaction temperature would not be too high; less diethyl ether during crystallization would reduce product yield and quality; compared with DCM, the reaction temperature does not need to be too low when using acetone as the solvent, and the reaction conditions tend to be milder. Specifically, when acetone is used as the solvent, the reaction temperature is controlled at 10 °C to 15 °C, and the amount of diethyl ether is appropriately increased, resulting in higher product yield and better quality.

From the above examples, it can be seen that high-quality boron trifluoride-piperidine complex could be prepared using the method provided by the present disclosure. At present, the market prospect of boron trifluoride-piperidine complex is broad, especially with the changes in application scenarios, higher requirements have been put forward for the quality of boron trifluoride-piperidine complex. The market for high-quality boron trifluoride-piperidine complexes is in short supply. Therefore, the method of the present disclosure has considerable economic benefits. For example, the raw material cost of boron trifluoride-piperidine complex per kilogram is about: 40+390+340=770 yuan. The current market price of boron trifluoride-piperidine complex is about 8000 yuan/kg, such that economic efficiency is about 1000%. In addition, DCM, acetone, and diethyl ether in the present disclosure could all be recycled, which is beneficial to further reducing costs and increasing benefits.

## Claims

1. A method for preparing a solid boron trifluoride-piperidine complex, comprising the following steps:
introducing boron trifluoride into a piperidine solution, and conducting complexation to obtain a complex material; wherein the piperidine solution comprises piperidine and an organic solvent, and the organic solvent is one or more selected from the group consisting of dichloromethane (DCM) and acetone;
concentrating the complex material to obtain a concentrate; and
subjecting the concentrate to crystallization by mixing the concentrate with diethyl ether, and subjecting a resulting crystallization material to solid-liquid separation to obtain the solid boron trifluoride-piperidine complex, wherein a mass ratio of the concentrate to the diethyl ether is in a range of 1:10 to 1:15; and
wherein subjecting the concentrate to crystallization by mixing the concentrate with diethyl ether is conducted by a process comprising:
adding a part of the diethyl ether dropwise into the concentrate, and conducting first crystal growth to obtain a first crystal growth material; and
adding a remaining part of the diethyl ether dropwise into the first crystal growth material, and conducting second crystal growth;
wherein the part of the diethyl ether accounts for 25% to 35% of a total mass of the diethyl ether.

2. The method of claim 1, wherein a mass ratio of the piperidine to the organic solvent is in a range of 1:2 to 1:4.

3. The method of claim 1, wherein a molar ratio of the boron trifluoride to the piperidine is in a range of 1:1.00 to 1:1.02.

4. The method of claim 1, wherein during introducing the boron trifluoride into the piperidine solution, the piperidine solution is at a temperature of 0 °C to 10 °C, and the boron trifluoride is introduced at a speed of 35 g/h to 45 g/h.

5. The method of any one of claims 1 to 4, wherein the complexation is conducted at a temperature of 0 °C to 15 °C for a time of 2 h to 3 h; and the time of the complexation starts when the boron trifluoride is completely introduced.

6. The method of claim 1, wherein the concentrating is conducted by vacuum distillation at a temperature of 40 °C to 55 °C under a pressure of -0.02 MPa to -0.04 MPa.

7. The method of claim 1, 2, or 6, wherein a mass ratio of the complex material to the concentrate is in a range of 1.9:1 to 2.1:1.

8. The method of claim 1, wherein, during adding the part of the diethyl ether dropwise into the concentrate, the concentrate is at a temperature of 10 °C to 15 °C; and the first crystal growth is conducted at a temperature of 5 °C to 10 °C for 2.5 h to 4 h; and,
during adding the remaining part of the diethyl ether dropwise into the first crystal growth material, the first crystal growth material is at a temperature of 5 °C to 10 °C; and the second crystal growth is conducted at a temperature of 0 °C to 10 °C for 0.5 h to 2 h.

## Patentansprüche

1. Ein Verfahren zur Herstellung eines festen Bortrifluorid-Piperidin-Komplexes, umfassend die folgenden Schritte:
Einleiten von Bortrifluorid in eine Piperidinlösung und Durchführen einer Komplexierung, um ein Komplexmaterial zu erhalten; wobei die Piperidinlösung Piperidin und ein organisches Lösungsmittel umfasst und das organische Lösungsmittel eines oder mehrere aus der Gruppe bestehend aus Dichlormethan (DCM) und Aceton ist;
Konzentrieren des Komplexmaterials, um ein Konzentrat zu erhalten; und
Unterziehen des Konzentrats einer Kristallisation durch Mischen des Konzentrats mit Diethylether und Unterziehen eines resultierenden Kristallisationsmaterials einer Fest-Flüssig-Trennung, um den festen Bortrifluorid-Piperidin-Komplex zu erhalten, wobei ein Massenverhältnis des Konzentrats zu dem Diethylether in einem Bereich von 1:10 bis 1:15 liegt; und
wobei das Unterziehen des Konzentrats einer Kristallisation durch Mischen des Konzentrats mit Diethylether durch ein Verfahren durchgeführt wird, umfassend:
tropfenweises Zugeben eines Teils des Diethylethers in das Konzentrat und Durchführen eines ersten Kristallwachstums, um ein erstes Kristallwachstumsmaterial zu erhalten; und
tropfenweises Zugeben eines verbleibenden Teils des Diethylethers in das erste Kristallwachstumsmaterial und Durchführen eines zweiten Kristallwachstums;
wobei der Teil des Diethylethers 25 % bis 35 % der Gesamtmasse des Diethylethers ausmacht.

2. Das Verfahren nach Anspruch 1, wobei ein Massenverhältnis des Piperidins zu dem organischen Lösungsmittel in einem Bereich von 1:2 bis 1:4 liegt.

3. Das Verfahren nach Anspruch 1, wobei ein Molverhältnis des Bortrifluorids zu dem Piperidin in einem Bereich von 1:1,00 zu 1:1,02 liegt.

4. Das Verfahren nach Anspruch 1, wobei während des Einleitens des Bortrifluorids in die Piperidinlösung die Piperidinlösung eine Temperatur von 0 °C bis 10 °C aufweist und das Bortrilfuorid mit einer Geschwindigkeit von 35 g/h bis 45 g/h eingeleitet wird.

5. Das Verfahren nach einem der Ansprüche 1 bis 4, wobei die Komplexierung bei einer Temperatur von 0 °C bis 15 °C über einen Zeitraum von 2 h bis 3 h durchgeführt wird; und die Zeitdauer der Komplexierung beginnt, wenn das Bortrifluorid vollständig eingeleitet ist.

6. Das Verfahren nach Anspruch 1, wobei das Konzentrieren durch Vakuumdestillation bei einer Temperatur von 40 °C bis 55 °C unter einem Druck von -0,02 MPa bis -0,04 MPa durchgeführt wird.

7. Das Verfahren nach Anspruch 1, 2 oder 6, wobei ein Massenverhältnis des Komplexmaterials zum Konzentrat in einem Bereich von 1,9:1 bis 2,1:1 liegt.

8. Das Verfahren nach Anspruch 1, wobei während des tropfenweisen Zugebens des Teils des Diethylethers in das Konzentrat das Konzentrat eine Temperatur von 10 °C bis 15 °C aufweist; und das erste Kristallwachstum bei einer Temperatur von 5 °C bis 10 °C für 2,5 h bis 4 h durchgeführt wird; und während des tropfenweisen Zugebens des verbleibenden Teils des Diethylethers in das erste Kristallwachstumsmaterial das erste Kristallwachstumsmaterial eine Temperatur von 5 °C bis 10 °C aufweist; und das zweite Kristallwachstum bei einer Temperatur von 0 °C bis 10 °C für 0,5 h bis 2 h durchgeführt wird.

## Revendications

1. Procédé de préparation d'un complexe solide de trifluorure de bore-pipéridine, comprenant les étapes consistant à :
introduire du trifluorure de bore dans une solution de pipéridine, et réaliser la complexation pour obtenir une matière complexe ; dans lequel la solution de pipéridine comprend de la pipéridine et un solvant organique, et le solvant organique est un ou plusieurs choisis dans le groupe constitué par le dichlorométhane (DCM) et l'acétone ;
concentrer la matière complexe pour obtenir un concentré ; et
soumettre le concentré à cristallisation en mélangeant le concentré avec de l'éther diéthylique, et soumettre une matière de cristallisation résultante à une séparation solide-liquide pour obtenir le complexe solide de trifluorure de bore-pipéridine,dans lequel un rapport massique du concentré à l'éther diéthylique est dans une plage de 1:10 à 1:15 ; et
dans lequel l'étape consistant à soumettre le concentré à cristallisation en mélangeant le concentré à de l'éther diéthylique est réalisée par un processus comprenant les étapes consistant à :
ajouter une partie de l'éther diéthylique au goutte-à-goutte dans le concentré, et réaliser une première croissance cristalline pour obtenir une première matière de croissance cristalline ; et
ajouter une partie restante de l'éther diéthylique au goutte-à-goutte dans la première matière de croissance cristalline, et réaliser une seconde croissance cristalline ;
dans lequel la partie de l'éther diéthylique représente 25 % à 35 % d'une masse totale de l'éther diéthylique.

2. Procédé selon la revendication 1, dans lequel un rapport massique de la pipéridine au solvant organique est dans une plage de 1:2 à 1:4.

3. Procédé selon la revendication 1, dans lequel un rapport molaire du trifluorure de bore à la pipéridine est dans une plage de 1:1,00 à 1:1,02.

4. Procédé selon la revendication 1, dans lequel pendant l'étape consistant à introduire le trifluorure de bore dans la solution de pipéridine, la solution de pipéridine est à une température de 0 °C à 10 °C, et le trifluorure de bore est introduit à une vitesse de 35 g/h à 45 g/h.

5. Procédé selon l'une quelconque des revendications 1 à 4, dans lequel la complexation est mise en œuvre à une température de 0 °C à 15 °C pendant une durée de 2 h à 3 h ; et la durée de la complexation démarre lorsque le trifluorure de bore est entièrement introduit.

6. Procédé selon la revendication 1, dans lequel l'étape consistant à concentrer est réalisée par distillation sous vide à une température de 40 °C à 55 °C à une pression de - 0,02 MPa à -0,04 MPa.

7. Procédé selon la revendication 1, 2 ou 6, dans lequel un rapport massique de la matière complexe au concentré est dans une plage de 1,9:1 à 2,1:1.

8. Procédé selon la revendication 1, dans lequel, pendant l'étape consistant à ajouter la partie de l'éther diéthylique au goutte-à-goutte dans le concentré, le concentré est à une température de 10 °C à 15 °C ; et la première croissance cristalline est réalisée à une température de 5 °C à 10 °C pendant 2,5 h à 4 h ; et,
pendant l'ajout de la partie restante de l'éther diéthylique au goutte-à-goutte dans la première matière de croissance cristalline, la première matière de croissance cristalline est à une température de 5 °C à 10 °C ; et la seconde croissance cristalline est réalisée à une température de 0 °C à 10 °C pendant 0,5 h à 2 h.
